# EUROPEAN PATENT APPLICATION

(11) **EP 3 929 838 A1**
(43) Date of publication of application: **29.12.2021**
(21) Application number: 20182356.4
(22) Date of filing: 25.06.2020
(51) Int. Cl.: G06Q 10/08, G06Q 50/28

(54) **ROAD CARGO COMMUNICATION SYSTEM AND METHOD USING PLATE NUMBERS**

(71) Applicant: Rosenboom, Hendrik, 86157 Augsburg (DE)
(72) Inventor: Rosenboom, Hendrik, 86157 Augsburg (DE)
(74) Representative: Grünecker Patent- und Rechtsanwälte PartG mbB

(57) **Abstract**

A communication system and method of establishing communication with a driver of a road cargo transportation vehicle based on the vehicle's plate number is disclosed. A communication server has a database that stores vehicle data including plate numbers of a plurality of road cargo transportation vehicles and driver data identifying device identifiers of mobile devices for each of a plurality of drivers. The communication server receives vehicle data of a road cargo transportation vehicle and driver data identifying a current driver of the vehicle and associates the driver's mobile device identifier with the vehicle's plate number. Subsequently, the communication server receives a message addressed to the vehicle's plate number and forwards the message to the driver's mobile device based on the respective device identifier obtained by querying the database for the vehicle's plate number. The disclosure further relates to a communication device for use in the disclosed system.

## Description

### FIELD

The present invention relates to a communication system and in particular, to a communication system for providing a communication channel to a driver of a truck or a comparable road cargo transportation vehicle.

### BACKGROUND

Our modern lifestyle strongly depends on the local availability of products from all around the world. Both traditional brick and mortar type stores as well as online businesses rely on a global transportation industry for delivering products to local stores, to local logistic centers or directly to the customer. A large part of the global transportation services is provided through road-based cargo transportation vehicles.

As an example, the European road transport industry provides essential logistic services to hundreds of millions of people by carrying all kinds of goods all across Europe, resulting in a total revenue of 360 Billion €. More than 500 000 transportation companies operate 4-6 million trucks and transport more than a million loads per day. Commercial road-based cargo transportation is organized as a complex network commonly built of three layers, with shippers demanding transport capacity in order to get a specific load from a start location to a destination, carriers owning transport capacity and executing transports and forwarders coordinating the transport services between shippers and carriers.

The network changes on a daily basis with about 25% of spot loads that are not subject of long running contracts. In addition, the organization of the transport itself has to be flexible, as changes in important details of a transport are inherent to the process, e.g. due to exceptions in the execution of a transport (e.g. because of a traffic jam) or short notice changes on the shipper or warehouse side (e.g. because of new docking sites, new docking times, changes in load volume or weight, etc.). In order to setup and manage such an ever changing, flexible network, a great deal of communication among the different parties involved in a transport order is necessary. A lack of practicable systems that allow easy communication between the parties and in particular with the driver of the truck who is carrying out a particular transport has led to complex and fragmented administration procedures, which in turn lead to high administration costs. In addition, a lack of communication also leads to an inefficient utilization of the potential transport capacity of the network with an estimated 40% of truck kilometers in Europe running empty. This results in unnecessary traffic, which produces higher costs, higher CO₂ emission, higher fuel consumption and contributes to the high traffic density on the European road network.

Although several approaches were taken in the last 20 years to overcome some of these issues, the fractured nature of the industry has so far prevented the wide adaption of a standard for communication throughout the network. Consequently, the most important tool for communicating is still voice telephony. In addition, with a growing popularity of smart phones, instant messaging has emerged as a second communication channel. In particular, WhatsApp^{®} is a popular choice among industry players. However, to reach a driver on his telephone, a shipper or forwarder has to have knowledge of the telephone number of the particular device of the driver. This Information is usually only available to the carrier dispatcher in charge of the management of the specific truck that carries out the transport. The phone number of the carrier dispatcher on the other hand is only available to the forwarder. Therefore, the solution to provide a message to a driver commonly results in a phone chain where the shipper calls the forwarder, the forwarder calls the carrier dispatcher, who in turn provides the message to the driver. The answer of the driver takes the same route in the reverse direction form the dispatcher to the forwarder and finally to the shipper. This system is highly inefficient and error prone. The multistep communication leads to long delays in the communication, possibly leading to additional errors and additional costs. In addition, the communication is difficult to document and accountability for occurred errors is hardly verifiable.

Managing the driver and direct contact to the driver is considered an essential asset by the carriers. Hence, they strongly oppose any solution that could deprive them of controlling the direct access to the driver. In addition, forwarders will not agree to solutions that short circuit their position in the transport network. Therefore, simply providing the forwarder or the shipper with e.g. the telephone number of the driver is not an accepted approach in the industry. Furthermore, any solution based on additional specialized hardware installed in the transportation vehicle has so far not found broad support in the industry due to a lack of an accepted standard. Without such a standard, these solutions lead to high costs for installation and maintenance of several incompatible devices. In addition, software and hardware compatibility issues may arise when several different devices are installed.

### SUMMARY

The presented technologies aim to overcome the shortcomings of the state of the art system with a method, a system and a communication device allowing all parties of a transport task direct and controlled contact to a driver of a truck that carries out the transport task without the need of knowledge of a phone number of the driver's mobile device. In addition, the present invention relates to a communication device as part of the system of the invention.

The following detailed description is directed to technologies for solving the problem by providing a communication method and system that uses the plate number of a road cargo transportation vehicle to establish communication with the driver of the vehicle. The solution only relies on the driver having access to a mobile communication network via a mobile communication device while operating the transportation vehicle. The system and the method allows a user of a communication portal to send a message to a driver of a road cargo transportation vehicle by specifying the plate number of the vehicle as the target address of the message. A communication server receives the message, determines the mobile phone number or a current IP address of the driver's mobile communication device and forwards the message to the respective device.

Some embodiments relate to a road cargo communication method of establishing communication with a driver of a road cargo transportation vehicle based on the vehicle's plate number. The method is performed by a communication server of a communication system. The communication server has a database, which stores vehicle data including plate numbers of a plurality of road cargo transportation vehicles. The database further stores driver data identifying a plurality of drivers and device identifiers of mobile communication devices for each driver of the plurality of drivers. The communication server receives vehicle data of a particular road cargo transportation vehicle, which is currently operated by a specific driver and additionally receives driver data identifying the specific driver. The communication server queries the database for the received vehicle data of the particular road cargo transportation vehicle. The communication server further queries the database for the driver data identifying the specific driver. If the particular road cargo transportation vehicle's vehicle data and the specific driver's driver data are determined as being stored in the database, the communication server associates the specific driver's device identifier of the specific driver's mobile communication device with the particular road cargo transportation vehicle's plate number. Subsequently, the communication server receives a message destined for the specific driver but addressed to the particular road cargo transportation vehicle by specifying the particular road cargo transportation vehicle's plate number as the target address of the message. The communication server then forwards the message to the specific driver's mobile communication device via a mobile communication network based on the device identifier of the specific driver's mobile communication device. The device identifier is or has previously been obtained by querying the database for the particular road cargo transportation vehicle's plate number.

In some embodiments, the communication system may optionally comprise an electronic tachograph of the particular cargo transportation vehicle. The electronic tachograph is configured to read the driver data identifying the specific driver from a driver identification card and is further configured to store the driver data and the vehicle data of the particular road cargo transportation vehicle on an internal storage of the electronic tachograph. The communication system may further comprise a communication device connected to the electronic tachograph. The communication device is configured to read, from the internal storage of the electronic tachograph, the vehicle data and the driver data and to transmit the vehicle data and the driver data to the communication server via a mobile communication network connection. The vehicle data of the particular road cargo transportation vehicle and the driver data identifying the specific driver may be received from the electronic tachograph of the particular cargo transportation vehicle via the communication device connected to the tachograph.

Receiving vehicle and driver data directly from the electronic tachograph provides current data with a high level of trust due to the use of a certified infrastructure. The automatic process enhances the reliability of the method and requires little to no (additional) actions of the driver. Thereby the necessary training for the drivers is minimized and possible error sources are avoided.

Optionally, the electronic tachograph may be configured to store a current steering time of the specific driver on the internal storage of the electronic tachograph. The communication device may be further configured to transmit the current steering time of the specific driver to the communication server. The communication server may receive the current steering time of the specific driver from the electronic tachograph via the communication device connected to the electronic tachograph.

Additionally providing the steering times of the driver allows ensuring the compliance with steering time regulations and enhances the tour scheduling for carriers, forwarders and shippers.

In some embodiments, the specific driver's device identifier may be at least one of a mobile phone number and an IP address of the specific driver's mobile communication device.

In some aspects, the vehicle data of the particular road cargo transportation vehicle comprise at least one of the plate number and the chassis number of the particular road cargo transportation vehicle.

In exemplary embodiments, the database further stores a plurality of transport tasks and for each transport task a communication group comprising a plurality of users of the communication system. The communication server may query, based on the vehicle data of the particular road cargo transportation vehicle, the database for a transport task that is assigned to the particular road cargo transportation vehicle. The communication server may also query the database for the corresponding communication group based on the vehicle data of the particular road cargo transportation vehicle. The communication server may receive another message from the specific driver's mobile communication device and may forward the other message to at least one of the plurality of users of the communication group corresponding to said transport task.

Employing communication groups combined with transport tasks provides an efficient communication between all parties of a transportation task. In addition, it allows the driver to efficiently communicate with both the forwarder and the scheduler, which would otherwise only be possible via the carrier dispatcher. Further, it allows all parties to stay informed about all relevant conversations concerning the transport task.

In some embodiments, the communication server may add a communication group identifier to the message prior to forwarding the message. The communication group identifier identifies the communication group corresponding to the assigned transport task. The communication server may receive the other message from the driver's mobile communication device as a reply to the message forwarded to the driver's mobile communication device. The other message may specify the communication group identifier and the communication server may forward the other message to at least one of the plurality of users of the communication group identified by the communication group identifier specified in the other message.

Using a group identifier for specifying a group to which a message belongs allows the communication server to efficiently associate the message to a certain communication group independently form the transport task. Hence, the communication group data can be retrieved more efficiently form the database, which reduces the load on the database.

In embodiments in which the communication server receives the specific driver's steering times from the electronic tachograph of the particular road cargo transportation vehicle, the communication server may optionally provide the steering times of the specific driver to at least one of the plurality of users of the communication group corresponding to the transport task.

In some embodiments, the specific driver's mobile communication device comprises a geo-location module configured to detect the current geographical location of the specific driver's mobile communication device. The communication server may receive, from the specific driver's mobile communication device, geo-location data indicating a current geographical location of the mobile communication device detected by the respective geo-location module and may provide the geo-location data to at least one of the plurality of users of the communication group corresponding to said transport task.

Using the system to receive geo-location data from the driver's mobile communication device builds on the provided association between the road cargo transportation vehicle and the driver's mobile device and efficiently utilizes the location detection capacity of modern mobile communication devices for at least approximately tracking the geo-position of a truck without the need for an additional dedicated device in the truck itself.

The present invention further provides a road cargo communication system for establishing communication with a driver of a road cargo transportation vehicle based on the vehicle's plate number. The system comprises a database, a communication server connected to the database and a communication device. The database stores vehicle data including plate numbers of a plurality of road cargo transportation vehicles and driver data identifying a plurality of drivers and device identifiers of mobile communication devices for each driver of said plurality of drivers. The communication server is connected to the database and to a first and a second mobile communication network. The communication server comprises a first receiving module, a data processing module, a second receiving module and a forwarding module. The first receiving module is configured to receive, via the first mobile communication network, vehicle data of a particular road cargo transportation vehicle and driver data identifying a specific driver currently operating the vehicle. The data processing module is configured to query the database for the vehicle data of the particular road cargo transportation vehicle and querying the database for the driver data identifying the specific driver. The data processing module is further configured to, if the particular road cargo transportation vehicle and the specific driver are determined as being stored in the database, associate the specific driver's device identifier of the specific driver's mobile communication device with the particular road cargo transportation vehicle's plate number. The second receiving module is configured to receive a message destined for the specific driver but addressed to the particular road cargo transportation vehicle by specifying the particular road cargo transportation vehicle's plate number as the target address of the message. The forwarding module is configured to query the database for the particular road cargo transportation vehicle's plate number to determine the device identifier of the specific driver's mobile communication device and forward the message to the specific driver's mobile communication device via the second mobile communication network based on the determined device identifier. The communication device is a communication device for an electronic tachograph of the particular road cargo transportation vehicle. The communication device is configured to read the vehicle data and the driver data from the electronic tachograph and to transmit the vehicle data and the driver data to the first receiving module of the communication server via the first mobile communication network.

The present invention further provides a communication device connectable to an electronic tachograph of a road cargo transportation vehicle. The communication device is configured to read, from the electronic tachograph, vehicle data of said vehicle and driver data identifying a driver currently operating said vehicle and to transmit the vehicle data and the driver data to a communication server of the road cargo communication system provided by the present invention according to any of the above-discussed embodiments of the road cargo communication system.

### BRIEF DESCRIPTION OF THE DRAWINGS

In order to best describe the manner in which the above-described embodiments are implemented, as well as define other advantages and features of the disclosure, a more specific description is provided below and is illustrated in the appended drawings. These drawings depict exemplary embodiments and are not therefore to be considered to be limiting in scope. The examples will be described and explained in detail with reference to the accompanying drawings in which an entity is consistently referred to with the same reference number, wherein:
FIG. 1 illustrates an overview of an example implementation of the communication system according to embodiments;
FIG. 2 illustrates an example implementation of a user interface provided by the communication system according to embodiments;
FIG. 3 illustrates an example implementation of a communication server of the communication system according to embodiments;
FIG. 4 illustrates an example implementation of a dongle device, which provides vehicle and driver data to the communication server in some embodiments;
FIG. 5 illustrates a method for communicating with a driver of a road cargo transportation vehicle performed in the communication system according to embodiments; and
FIG. 6 illustrates an example computing device utilized in different portions of the communication system according to embodiments.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and the scope of the provided disclosure.

The present invention provides a method and a system for communicating with a driver of a road cargo transportation vehicle (e.g. a truck, a transporter, a delivery car or the like) without explicit knowledge of a device identifier (e.g. a phone number or an IP address) of a mobile communication device of the driver. The invention allows communicating with the mobile device of the driver by directing messages addressed to the plate number of the road cargo transportation vehicle operated by the driver to the mobile device of the driver.

In some embodiments, the mobile communication device is a mobile phone (e.g. a smart phone) on which an instant messaging client is installed. The instant messaging client maybe a general purpose Messenger like the WhatsApp^{®} Messenger or the Facebook^{®} Messenger or a proprietary Messenger specifically adapted to the disclosed system. The instant messaging client is configured to receive instant messages via the mobile communication network from a communication server.

In some embodiments, the road cargo transportation vehicle is equipped with an electronic tachograph that stores and provides data identifying the driver of the vehicle and data identifying the vehicle, the vehicle data including the plate number of the vehicle. The electronic tachograph is connected to a mobile communication network (e.g. the same mobile communication network to which the driver's mobile communication device is connected or a different mobile communication network) via a communication device (e.g. a communication dongle externally connected to the electronic tachograph via a input/output interface of the electronic tachograph or a communication device internal to the electronic tachograph). The communication device transmits the vehicle and driver data to the communication server via the mobile communication network.

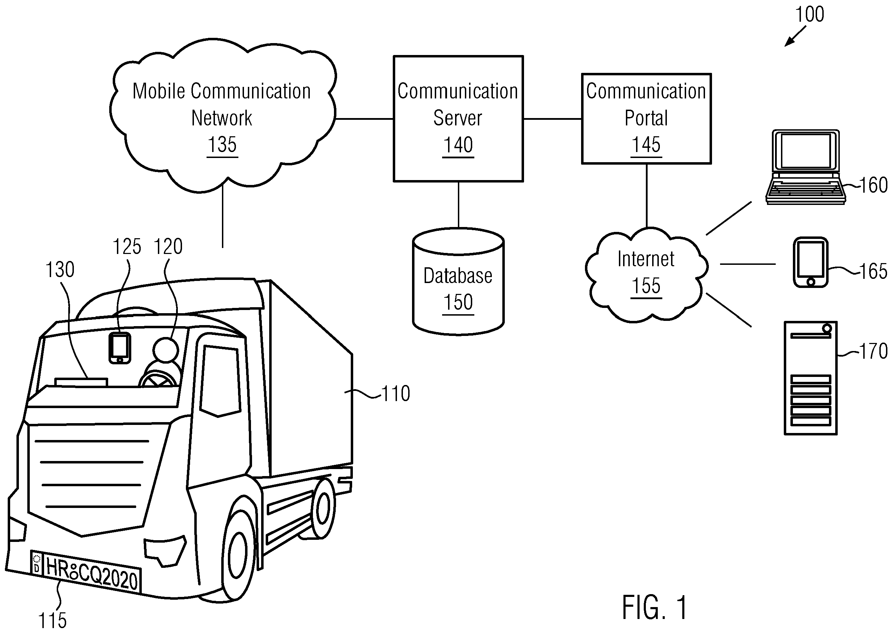

FIG. 1 provides an overview of a communication system according to embodiments. The communication system 100 includes a communication server 140 and a database 150. Communication server 140 is configured to read data from and to write data to database 150. Database 150 can be any type of database that allows to efficiently store and retrieve data including relational databases (e.g. MySQL^{®}, Microsoft SQL Server^{®}, Oracle^{®}, DB2^{®} or PostgreSQL^{®}), NoSQL databases (e.g. Neo4j^{®}, SAP Hybris^{®} or MongoDB^{®}), cloud-based databases (e.g. Microsoft Azure^{®}, Amazon RDS^{®} or Google Cloud SQL^{®}) or file-based databases (e.g. SQLite or Microsoft Access DB^{®}). In some embodiments, database 150 is a local database stored at communication server 140. In other embodiments, database 150 is a remote database stored at a remote server and accessed by communication server 140 over a network.

Communication server 140 is connected to mobile communication network 135 that allows wide range wireless communication with mobile communication devices also connected to communication network 135. In some embodiments, mobile communication network 135 is a cellular network including voice services and mobile data services (e.g. GSM, UMTS, LTE). In other embodiments, mobile communication network 135 is a satellite-based network that provides data services and optionally voice services (e.g. Iridium Global Network or Inmarsat Network). In some embodiments, communication server 140 is connected to two or more different mobile connection networks 135, either being different cellular networks, being different satellite-based networks or at least one being a satellite-based network and at least another one being a cellular network.

Mobile communication network 135 allows communication server 140 to connect to mobile communication device 125 of driver 120, who operates road cargo transportation vehicle 110. Mobile communication device 125 is connected to mobile communication network 135 and is adapted to receive data transmissions and optionally voice calls via mobile communication network 135. In some embodiments, mobile communication device 125 is a mobile phone, a smart phone or a tablet device. In other embodiments, mobile communication device 125 is a notebook with a communication module adapted to connect to mobile communication network 135. In some of the above embodiments, the mobile communication device is able to load, store and execute specifically adapted software such as instant messaging client applications (e.g. WhatsApp^{®} Messenger, Facebook^{®} Messenger, WeChat^{®}, IMO, Telegram^{®} Messenger, Skype) or other applications.

Road cargo transportation vehicle 110 is configured for road-based cargo transportation (i.e. freight transport or goods transport). Road cargo transportation vehicle 110 may be one of a truck, a transporter, a (delivery) van, a pickup truck, or a car-based delivery vehicle.

Road cargo transportation vehicle 110 is registered with a national vehicle registration authority or vehicle licensing agency. With this registration an official vehicle registration number (i.e. plate number 115) is assigned to the vehicle by the authority or agency. Plate number 115 uniquely identifies vehicle 110 within the realm of the competent national authority. In combination with an additional indication of the region in which vehicle 110 is registered (e.g. a country code) plate number 115 is unique for a specific vehicle even in a larger region (e.g. in the European Union, the member states of the European Economic Area). The vehicle registration number is visibly attached to the road cargo transportation vehicle in the form of a front and a back number plate in order to allow other road users to identify the specific vehicle based on plate number 115. Plate number 115 is used purely for vehicle registration and vehicle identification purposes and is not related to providing any type of communication for the vehicle or the vehicle driver.

Alternatively or additionally, a chassis number (i.e. VIN = vehicle identification number) is assigned to vehicle 110, which also uniquely identifies the vehicle. The VIN is a 17 digit internationally standardized unique code including a serial number. The VIN is standardized according to ISO 3779, ISO 3780 and ISO 4030. While the plate number is assigned to a vehicle only when and as long as it is registered with a competent authority, the VIN is permanently assigned and attached (although usually not visibly attached) to the vehicle. As the plate number, the VIN is used purely for vehicle registration and vehicle identification purposes and is not related to providing any type of communication for the vehicle or the vehicle driver.

Driver 120 drives road cargo transportation vehicle 110. Driver 120 is assigned to vehicle 110 by a dispatcher, both of whom are working for a carrier who is the owner of vehicle 110. Driver 120 and vehicle 110 are assigned to a transport task that is to be performed by transporting a specified load from a departure location to a destination location at a specified date and time. The driver has access to mobile communication device 125 and is able to receive messages (e.g. SMS, EMS, MMS messages or instant messages like WhatsApp^{®} messages or Facebook^{®} messages) via mobile communication device 125.

Optionally, road cargo transportation vehicle 110 is equipped with electronic tachograph 130. In the European Union commercially operated trucks over 3,5t gross vehicle weight generally have to be equipped with an electronic tachograph in order to ensure compliance with mandatory European steering time requirements. In order to ensure the validity of the data provided by the electronic tachograph it needs to be officially certified. Furthermore, the electronic tachograph is subject to repeated inspection by official authorities in order to avoid manipulation of the device. Hence, an electronic tachograph in compliance with the respective European regulations provides a reliable data source and is already a legally required device in a typical road cargo transportation vehicle such as vehicle 110.

Electronic tachograph 130 may be installed in road cargo transportation vehicle 110. Electronic tachograph 130 stores data related to vehicle 110, including the plate number of the vehicle. Electronic tachograph 130 may also store technical data related to a current or past state of vehicle 110 (e.g. axle loads and/or speed). The technical data may be retrieved by electronic tachograph 130 via a connection to a CAN bus system of vehicle 110.

A commercial truck driver is in most cases required to own an official driver card issued by a competent national authority. The driver card stores data, which identify the driver such as the driver's driving license number, the driver's full name and the driver's birthdate. The driver card also stores a unique driver card identification number that uniquely identifies the driver card and thereby the driver to whom the card is associated. At the beginning of a tour, driver 120 inserts his/her personal driver card into a card-reading apparatus of electronic tachograph 130.

The electronic tachograph verifies the validity of the driver card, reads the driver data from the card and stores the driver data in a secured internal storage of electronic tachograph 130. A communication unit, either externally connected or internal to the electronic tachograph, may be configured to read both the vehicle data and the driver data from the electronic tachograph and transmit the data to communication server 140 via mobile communication network 135.

Communication server 140 provides a communication portal 145 to which different users can connect to over internet 155. Communication portal 145 provides user access to the services provided by communication server 140. Users can connect to communication portal 145 using a computing device (e.g. notebook 160, smart phone or tablet 165, or desktop computer 170). Communication portal 145 can be implemented as a web service, which is accessed by the user via a browser running on the user's computing device. Alternatively or additionally, communication portal 145 can be implemented as a distinct server application accessed by the user via a separately installed client application on the user's computing device. The client application can be specifically adapted to the system of the user's computing device and may be configured to interoperate with the server application to provide the user with access to the services of communication server 140.

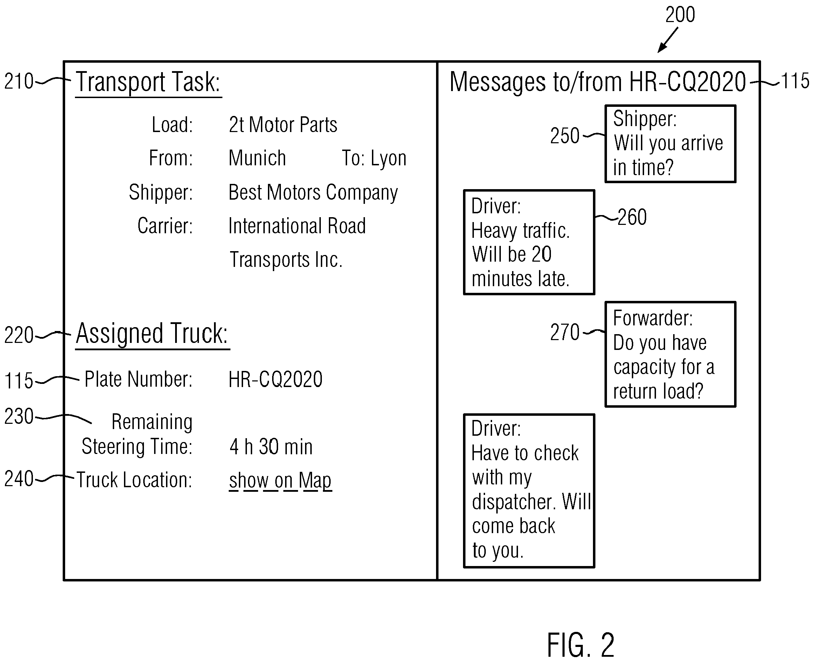

An example user interface 200 for interacting with communication portal 145 is depicted in FIG 2. A user of communication portal 145 such as a forwarder, a shipper and/or a carrier may connect to communication portal 145 via a connection to internet 155. The user may use a browser or a specialized application on a computing device (e.g. desktop 170, notebook 165 or tablet/mobile phone 165) in order to interact with communication portal 145. The depicted user interface is merely an example in order to facilitate the discussion of aspects of embodiments of the present invention. However, it is not intended to limit the scope of the invention.

The communication portal may distinguish different user roles. The portal may provide different user interfaces to different user roles. A user may have the user role of a shipper, a forwarder or a carrier and a respective user interface may be presented by the user portal for each of these different roles. A forwarder may be provided a user interface that allows to setup a transport task, to assign a carrier and a shipper to the transport task and to invite the carrier and the shipper to join the transport task. A carrier may be provided with a user interface that allows to accept an invitation to join the transport task and to assign a truck to the transport task (e.g. by providing the plate number of the truck). A shipper may be provided with a user interface that allows to accept an invitation to join a transport task and to view the relevant details of the respective transport task.

The user interface 200 depicted in FIG. 2 may be available to all users that are related to the transport task (e.g. the forwarder that created the task, the carrier and the shipper that had been assigned to the task and joined the task). User interface 200 is displayed on the user's computing device. User interface 200 provides details of transport task 210. The details of transport task 210 including the load weight and type, the departure and destination location, an associated shipper and an associated carrier. The details of transport task 210 are only exemplary and may be more or less detailed. For example, departure and destination locations are indicated by the city names in FIG. 2, but may also be indicated by full departure and destination addresses. In addition, the information regarding the load, the shipper or the carrier may be more detailed. Moreover, additional information concerning the transport task may be provided or some of the above-discussed information may not be provided such as the shipper and the carrier information.

User Interface 200 indicates road cargo transportation vehicle 110 assigned to the transport task e.g. by indicating plate number 115. Additionally, further details concerning the truck may be displayed such as the type of vehicle 110, the gross vehicle weight of vehicle 110, or the loading capacity of vehicle 110. User interface 200 may further provide data concerning the steering time of driver 120 such as the remaining steering time 230. Alternatively or additionally, the current steering time of driver 120 may be displayed in user interface 200. Furthermore, user interface 200 may provide access to the current location 240 of road cargo transportation vehicle 110 e.g. by providing a link to a map on which the location of vehicle 110 is indicated.

User interface 200 also may allow the user to send a message to driver 120. The interface may show all messages that are sent by the users related to the transport task and the driver 120 or may alternatively only show the messages from the current user of user interface 200 and driver 120. In the example shown in FIG. 2 the shipper sent a message 250 to the driver asking about the arrival time. The drive answered with message 260. In addition, the forwarder sent a message 270 to driver 120 asking about capacity for a return load. Driver 120 also replied to this message. In the exemplary user interface each user related to the transport task has access to all messages sent for the transport task. A message may be a text message. The message additionally may also include an attachment (e.g. an image, a pdf document, a word document or any other file). FIG. 2 shows all messages sent to driver 120 on the right side of the message portion of user interface 200 and all messages from driver 120 to the users related to the transport task on the left side of the message portion of user interface 200. This specific arrangement is merely one of many possible arrangements of the displayed messages.

A user of portal 145 may use user interface 200 to send a message to driver 200. The user may be provided with user interface elements (e.g. a button or a link) to allow the user to create a message directed to driver 200 but addressed to road cargo transportation vehicle 110 by indicating plate number 115. In the depicted user interface plate number 115 of vehicle 110 is preselected for the messages through an assignment of vehicle 110 to selected transport task 210. In alternative embodiments, the interface explicitly allows specifying a plate number of a road cargo transportation vehicle to which the message is addressed. When the user has composed and sent a new message addressed to vehicle 110, the message is displayed in the messaging portion of user interface 200. The message, which is transmitted from the user device to communication server 140, indicates plate number 115 of vehicle 110 as the destination address of the message. Communication server 140 queries database 150 for a device identifier (e.g. a phone number or an IP address) which is associated with indicated plate number 115. If the query result received from database 150 includes a device identifier (e.g. the mobile device identifier of mobile communication device 125) associated with indicated plate number 115, communication server 140 uses the device identifier to forward the message to the mobile communication device (e.g. mobile communication device 125) identified by the device identifier.

In some embodiments, the device identifier is a mobile phone number of a mobile communication device (e.g. mobile communication device 125) and communication server 140 forwards the received message as an instant message (e.g. a WhatsApp^{®} message or a Facebook^{®} message) to the mobile phone number i.e. to the device that corresponds to the mobile phone number. Alternatively, communication server forwards the received message as an SMS, EMS, or MMS message to the mobile phone number i.e. to the device that corresponds to the mobile phone number. In some embodiments, the message transmitted to the communication server includes at least one attachment and the attachment is forwarded together with the message to the device that is identified by the device identifier (e.g. as an attachment to a WhatsApp^{®} Message or an MMS message). In other embodiments, communication server 140 stores the attachment of the transmitted message and replaces the attachment in the forwarded message with a link to the stored attachment. The link may allow the mobile communication device, which receives the forwarded message, to access the stored attachment. However, access to the attachment may only be provided after additional authentication (e.g. user credentials, such as a username and a respective password of an authorized user) is received.

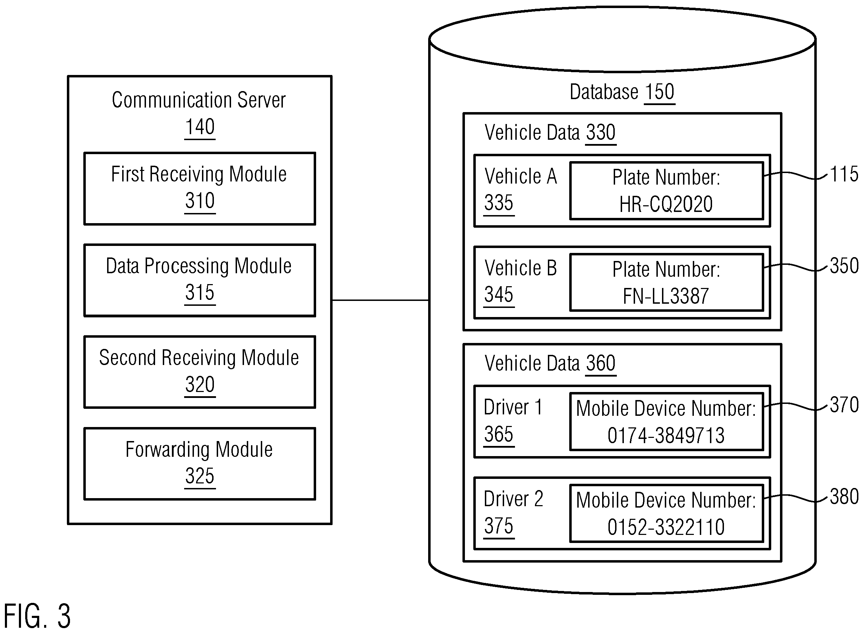

FIG. 3 shows an exemplary embodiment of communication server 140 and database 150. Communication server 140 comprises different functional modules, which may be implemented in hardware, software or a combination of both hardware and software. Communication server 140 has read and write access to database 150. This access allows communication server 140 to issue queries for structured data, which are stored in database 150. Database 150 receives such a query, processes the query and returns result data to communication server 140. Communication server 140 also may issue commands to database 150 that cause database 150 to store a set of data as structured data in database 150.

Database 150 stores structured data and processes queries and commands issued to databases 150. Data stored in database 150 include vehicle data 330. Vehicle data 330 comprise a plurality of data sets each data set corresponding to a specific vehicle (e.g. road transportation vehicle 110). Exemplary vehicle data 330 comprise dataset 335 corresponding to vehicle A (e.g. road transportation vehicle 110) and dataset 345 corresponding to vehicle B (e.g. another road transportation vehicle). It is apparent to a skilled person that vehicle data 330 may comprise any number of vehicle data sets, although FIG. 3 only shows two different vehicle data sets in order to provide a concise description of embodiments of the invention.

Each vehicle data set includes the plate number of the respective vehicle. Data set 335 corresponding to vehicle A (e.g. road transportation vehicle 110) includes plate number 115. Data set 345 corresponding to vehicle B includes plate number 350. Each data set may also include additional data such as the VIN of the respective vehicle, the type of vehicle, technical data of the vehicle (e.g. gross vehicle weight, maximal loading capacity, maximal cargo dimensions, etc.). A vehicle data set may be provided to communication server 140 by a carrier via communication portal 145 and may be stored by communication server 140 in database 150.

Database 150 may also store driver data 360 including a plurality of different driver data sets, each driver data set identifying a respective driver (e.g. driver 120). Driver data 360 include driver data set 365 corresponding to driver 1 (e.g. driver 120) and driver data set 375 corresponding to driver 2 (e.g. a different driver). Each driver data set includes driver specific data sufficient to identify the driver e.g. a unique driver card identification number of the driver's driver card, the driving license number of the driver, a personal identity card number of the driver, a social security number of the driver, and/or a full name and a birthday of the driver, etc. It is apparent to a skilled person that driver data 360 may comprise any number of driver data sets, although FIG. 3 only shows two different vehicle driver data sets in order to provide a more concise description of embodiments of the invention.

Each driver data set includes a device identifier of a mobile communication device of the driver. Data set 365 corresponding to driver 1 (e.g. driver 120) includes device identifier 370 (i.e. a mobile phone number) of a mobile communication device (e.g. mobile communication device 125) of driver 1. Data set 375 corresponding to driver 2 includes device identifier 380, which in the depicted case is also a mobile phone number of a mobile communication device of driver 2. The device identifiers 370 and 380 are shown as mobile phone numbers. However, driver data sets 365 and 375 may additionally or alternatively include other device identifiers that allow to identify a respective mobile communication device and to address messages to the mobile device in a mobile data communication network to which the mobile communication device is connected, e.g. an IP address of the respective device. A vehicle data set may be provided to communication server 140 by a carrier via communication portal 145 and may be stored by communication server 140 in database 150.

Vehicle data 330 and driver data 360 are stored in database 150 as a preparatory measure. Before a vehicle is assigned to a transport task a respective vehicle data set may be stored in vehicle data 330. Equally, only a driver that is represented in database 150 by a respective driver data set in driver data 360 may be assigned to a vehicle or a transport task. However, as the device identifier associated with the driver might be subject to change, in some embodiments, the device identifier is not pre-stored in the database at a set-up time of the respective driver data set but is received at a later time, when the driver starts the tour associated with the transport task, when the driver starts the transport task or at another point in time associated with actually carrying out the transport task.

Communication server 140 comprises first receiving module 310, which is connected to mobile communication network 135 and is configured to receive, via mobile communication network 135, vehicle data of a road cargo transportation vehicle (e.g. road cargo transportation vehicle 110) and driver data identifying the current driver (e.g. driver 120) of the road cargo transportation vehicle. The data are received after the set-up time at a point in time that is associated with the actual processing of the transport tasks, e.g. at a start time of the tour associated with the transport task, at a time when the driver assumes responsibility as the driver of a road cargo transportation vehicle for carrying out a transportation task, at a start time of a transportation task or at another time during the transportation task.

In some embodiments the first receiving module receives the vehicle data and the driver data from a communication unit of an electronic tachograph (e.g. electronic tachograph 130). The electronic tachograph stores vehicle specific data (e.g. the plate number of the vehicle, the VIN of the vehicle) of the road cargo transportation vehicle in which the tachograph is installed. When a driver (e.g. driver 120) enters a road cargo transportation vehicle (e.g. vehicle 110) and starts a tour for carrying out a transport task, the driver inserts his personal driver card into a card reader of the electronic tachograph. The driver's driver card is uniquely identifiable with a unique driver card identification number. The unique driver card identification number is stored on the driver card together with other driver identifying data such as a driving license number of the driver and/or a the full name of the driver and the birthday of the driver. The electronic tachograph reads driver specific data (e.g. the unique driver card identification number, the driving license number of the driver, and/or the full name and the birthday of the driver) identifying the driver from the driver card and stores the data in a secured internal storage of the electronic tachograph.

The electronic tachograph is further equipped with a communication device (e.g. communication device 410) connected to mobile communication network 135. The communication device reads the vehicle specific data and the driver specific data from the secured internal storage of the electronic tachograph and transmits the data to first receiving module 310 of communication server 140 via mobile communication network 135.

In other embodiments, first receiving module 310 receives the vehicle data and the driver data via mobile communication network 135 from mobile communication device 125 of driver 120. Mobile communication device 125 may include a camera and driver 120 may use the camera to take a picture of plate number 115, which is visibly assembled on road transportation vehicle 110 in form of a number plate. The driver may then send an instant message (e.g. a WhatsApp^{®} Message or a Facebook^{®} Message) or an MMS with mobile communication device 125 including the picture and information identifying the driver (e.g. a device identifier of a communication device of the driver, a unique driver card identification number of the driver's driver card, the driver's driving license number, the driver's social security number, the driver's personal identity card number) in text form to communication server 140. Communication server 140 receives the message, employs known optical character recognition (OCR) techniques to identify the plate number from the received picture and employs known parsing techniques including artificial intelligence (Al) techniques to extract the information identifying the driver from the received message. Alternatively, the driver does not take a picture of the number plate and instead provides the plate number (or the VIN) of road transportation vehicle 110 in text form. In this case, the communication server also employs the known parsing techniques to extract the plate number information (or the VIN) from the received message. In some embodiments, the driver data received by receiving module 310 include a device identifier of a mobile communication device of the driver (e.g. mobile communication device 125).

Communication server 140 further comprises data processing module 315, which is configured to query database 150 for the vehicle data and the driver data received by first receiving module 310. If the query result returned by database 150 indicates that the vehicle identified by the received vehicle data is represented in database 150 by a matching vehicle data set (e.g. vehicle data set 335) in vehicle data 330 and that the driver identified by the received driver data is represented in database 150 by a matching driver data set (e.g. driver data set 365) in driver data 360, data processing module 315 associates the device identifier of the mobile device of the identified driver with the plate number of the identified road cargo transportation vehicle. Associating may be performed by data processing module 315 by issuing a command to database 150 for building a structured data set that allows to efficiently retrieve a device identifier based on a provided plate number (e.g. a dedicated table in the database having a column associated with the device identifier and a column associated with the plate number, preferably complemented by an index on the plate number column)

In some embodiments, data processing module 315 issues a query for a received plate number or a received VIN to database 150. Database 150 processes the query on vehicle data 330 and returns an indication whether or not vehicle data 330 include a matching vehicle data set (e.g. by returning any matching vehicle data set to data processing module 315 or by returning an indication of the number of matching vehicle data sets).

In addition, data processing module 315 issues a query for the received driver data (e.g. unique driver card identification number, driving license number, mobile device identifier of the driver's mobile device or the full name of the driver and the birthday of the driver) to database 150. Database 150 process the query on driver data 360 and returns an indication whether or not vehicle data 330 include a matching driver data set (e.g. by returning any matching driver data set to data processing module 315 or by returning an indication of the number of matching driver data sets). If the results received by data processing module 315 indicate that a matching vehicle data set and a matching driver data set is stored in database 150, processing module 315 associates the device identifier of the mobile device of the driver represented by the matching driver data set with a plate number of a road cargo transportation vehicle represented by the matching vehicle data set. If the received vehicle data specified a VIN of the vehicle, the respective plate number of this vehicle may be retrieved from the matching vehicle data set of vehicle data 330 in database 150. In some embodiments, the mobile device identifier of the driver's mobile communication device is retrieved from the matching driver data set of driver data 360 in database 150. In other embodiments, the device identifier is specified in the driver data received by first receiving module 310 and data processing module retrieves the device identifier form the received driver data.

Second receiving module 320 of communication server 140 is configured to receive a message destined for a driver (e.g. driver 120) of a road cargo transportation vehicle (e.g. road transportation vehicle 110). The message is addressed to the road cargo transportation vehicle by specifying the plate number of the vehicle as the target address of the message. The plate number may be specified in the message itself (e.g. in a dedicated target address field of the message) or may be specified for the message in a separate request received by second receiving module prior to the message. The message and the separate request is received via communication portal 145 from a user's computing device (e.g. one of devices 160, 165 or 170). The user may send the message via user interface 200 provided by communication portal 145. The separate request may result from a user selecting a transport task for which the road cargo transportation vehicle is assigned.

Data forwarding module 325 of communication server 140 may parse the received message for the specified plate number or may obtain the plate number form the received request. Forwarding module may then issue a query to database 150 for the plate number specified in or for the message received by second receiving module 320, in order to determine a device identifier that has been associated with the plate number by data processing module 315. Database 150 processes the query (e.g. on a structured data set built for efficiently retrieving a device identifier based on a provided plate number) and returns a matching device identifier (if a matching device identifier exists) to data forwarding module 325.

Data forwarding module 325 forwards the message received by second receiving module 320 to the mobile communication device identified by the matching device identifier returned by database 150. Data forwarding module 325 specifies the matching device identifier as the destination address of the forwarded message. In some embodiments, data forwarding module 325 may be configured to forward the received message as an instant message (e.g. a WhatsApp^{®} message, a Facebook^{®} message) to the mobile communication device (e.g. mobile communication device 125) identified by the matching device identifier. Data forwarding module 325 may create an instant message based on the received message and send the instant message to the mobile communication device by providing the matching mobile device identifier (i.e. the mobile phone number of the mobile communication device) as the target address of the instant message. In these embodiments, data forwarding module 325 may act as an instant messaging client by employing an API of an instant messaging service (e.g. WhatsApp^{®}, Facebook^{®} messenger, Google^{®} messenger, or Telegram^{®}). In other embodiments, data forwarding module may be configured to forward the received message as an SMS-/EMS/- or MMS message to the mobile communication device (e.g. mobile communication device 125) identified by the matching device identifier (i.e. the mobile phone number of the mobile communication device). In alternative embodiments, the matching device identifier may be an IP-address (IP = Internet Protocol) of the mobile communication device and data forwarding module 325 is configured to forward the received message to the mobile communication device by specifying the IP-address of the mobile communication device as the target address of the forwarded message.

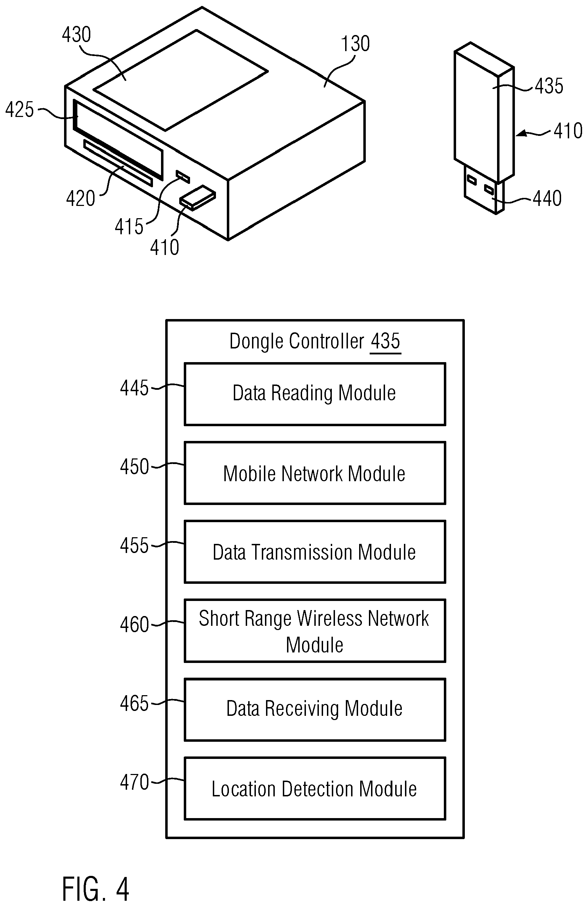

FIG. 4 depicts an exemplary implementation of a communication dongle connectable to electronic tachograph 130 serving as a communication device of electronic tachograph 130. Communication dongle 410 comprises connector 440 configured to plug into and external I/O port of electronic tachograph 130 (e.g. a USB connector, a Firewire connector, or a DB-type connector such as a DB9 connector or a DB15 connector) and to provide a data connection between the communication dongle and electronic tachograph 130.

Electronic tachograph 130 comprises a display 425, a secured internal storage 430 and a card reader 420 for reading data from a personal driver card. Additionally, electronic tachograph includes one or more external I/O ports (e.g. external I/O port 415). Communication dongle 410 is configured to connect to electronic tachograph 130 via connector 440 and a respective external I/O port of electronic tachograph 130 (e.g. a USB port, a Firewire port, a parallel port, or a DB-type port such as a DB9 port or a DB15 port).

Communication dongle 410 further comprises dongle controller 435, which is configured to control the different functions of control dongle 410. Dongle controller 435 comprises several modules which might be implemented as hardware modules comprising dedicated circuitry for performing the respective functions of the module. Alternatively or additionally, the modules or some of the modules may be implemented as software modules including software instructions stored on a memory device of the controller, wherein the software instructions cause a general purpose circuitry (e.g. a processing unit) to perform the functions of the respective software module. Dongle controller 435 comprises data reading module 445 configured to read data from internal storage 430 of electronic tachograph 130, including vehicle data related to the vehicle (e.g. vehicle 110) in which electronic tachograph is installed and driver data identifying a current driver of the vehicle. The vehicle data may comprise the plate number (e.g. plate number 115) of the vehicle (e.g. road cargo transportation vehicle 110) or the VIN of the vehicle. The driver data may include data available to electronic tachograph 130 from a personal driver card of the current driver of the vehicle, wherein the driver card is inserted in card reader 420 of electronic tachograph 130. The driver data may comprise a unique driver card identification number, the driving license number of the driver and/or a full name of the driver and a birthdate of the driver. Additionally, the driver data may comprise steering time data of the current driver. The steering time data indicate a time span the driver has spent driving the road cargo transportation vehicle. Due to statutory regulation rules, a driver of a commercial road cargo transportation vehicle is only allowed to drive the vehicle for a maximum continuous time span and has to take a break for a certain time before the driver is allowed to operate the vehicle again. Hence, the current steering time indicates how long a driver is still allowed to driver the vehicle and when he is required to take a break from driving the vehicle.

Dongle controller 435 comprises mobile network module 450 configured to provide a wide range wireless connection to mobile communication network 135. In some embodiments, mobile network module 450 is configured to connect to a cellular network providing mobile data services (e.g. a GSM, UMTS, or LTE network). In other embodiments, mobile communication module 450 is configured to connect to a satellite based network that provides data services (e.g. Iridium Global Network or Inmarsat Network).

Data transmission module 455 of dongle controller 435 is configured to transmit the vehicle data and the driver data read from electronic tachograph 130 to communication server 140 via the wide range mobile network connection provided by mobile network module 450. In some embodiments, data transmission module 455 may also transmit additional data to communication server 140 via the wide range mobile network connection. These additional data may comprise geo-location data obtained by location detection module 470 and a device identifier of a mobile communication device of the driver of the vehicle received by data receiving module 465.

In addition to mobile network module 450, dongle controller 435 may optionally comprise short range wireless network module 460. Short range wireless network module 460 allows to connect to devices in the vicinity (e.g. up to 5 meter, up to 10 meter or up to 50 meter) of connection dongle 435. In some embodiments, short range wireless network module 450 includes a Bluetooth^{®} radio module and is configured to connect to other devices via a Bluetooth connection. In other embodiments, short range wireless network module 450 includes a Wireless LAN (WLAN) radio module and is configured to connect to other devices via a Wireless LAN connection. Alternatively, short range wireless network module 450 includes a Near Field Communication (NFC) radio module and is configured to connect to other devices via an NFC connection.

In exemplary embodiments mobile network module 450 is implemented external to communication dongle 410 in a separate communication module (not shown). This design serves to reduce the power consumption of communication dongle 410. The dongles power consumption may be limited due to power consumption restrictions of the I/O port to which the dongle is connected. The separate communication module may comprise an additional short range wireless network module configured to communicate with short range wireless network module 460. Data transmission module 455, in this case, may be configured to transmit the vehicle data to the separate communication module via a short range wireless connection provided by short range wireless network module 450 and the additional short range wireless network module in the separate communication module. Data transmission module 455 may be further configured to instruct the separate communication module to transmit the received vehicle data to communication server 140.

Together with short range wireless network module 460, dongle controller 435 may optionally comprise data receiving module 465, which is configured to receive, via a short range wireless network connection provided by short range wireless network module 460, a device identifier of mobile communication device 125 of a current driver (e.g. driver 120) of road transportation vehicle 110. In some embodiments, data receiving module 465 receives the mobile device identifier from an application installed and executed on mobile communication device 125. The application is configured to connect to dongle controller 435 via a short range wireless network (e.g. Bluetooth^{®} or Wireless LAN) and to transmit the device identifier (e.g. the mobile phone number or the current IP address) of mobile communication device 125 to data receiving module 465.

Dongle controller 435 may further optionally comprise location detection module 470 configured to determine the geo-location (i.e. the absolute location in worldwide unique global coordinates, e.g. in terms of latitude and longitude) of communication dongle 435 (and thereby, also the geo-location of road cargo transportation vehicle 110). In some embodiments, location detection module includes a GPS module configured to steadily receive location data from at least two different GPS satellites and to determine the current geo-location of the communication dongle based on the steadily received location data. Alternatively or additionally, location detection module 470 may be configured to determine the geo-location of the communication dongle based on Wi-Fi access point data or cell ID data. Alternatively or additionally, location detection module may receive geo-location data from mobile communication device 125 via a short range wireless network connection provided by short range wireless connection module 460.

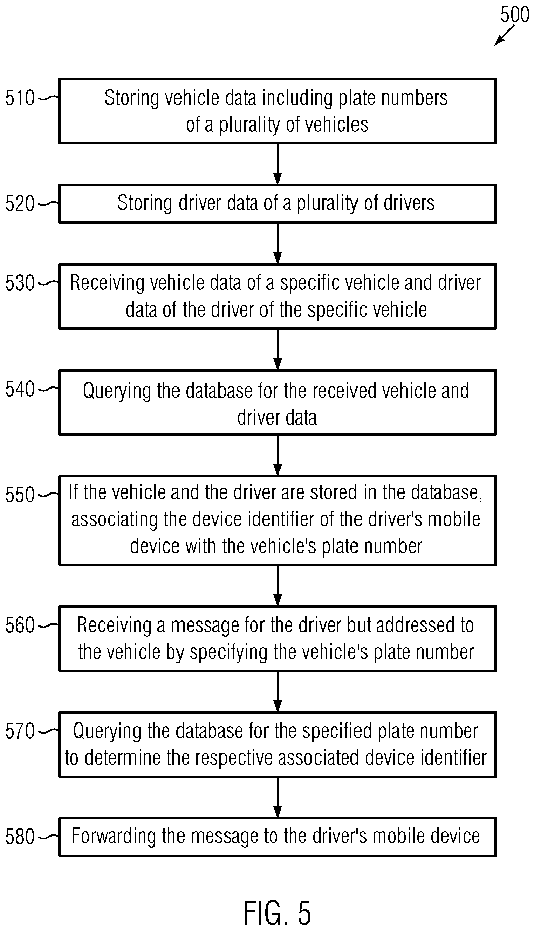

FIG. 5 is a flow diagram that describes steps in a road cargo communication method of establishing communication with driver 120 of road cargo transportation vehicle 110 based on the vehicle's plate number 115. The method is performed by communication server 140, which has read and write access to database 150.

In step 510 vehicle data 330 are stored in database 150. Vehicle data 330 comprise a plurality of vehicle data sets, wherein each vehicle data set corresponds to a road cargo transportation vehicle (e.g. vehicle 110). Each vehicle data set comprises the plate number of the respective road cargo transportation vehicle and may also comprise additional data related to the respective vehicle e.g. the VIN of the vehicle. The vehicle data may be received by communication server 140 from a user computing device via communication portal 145 at a set-up time.

In step 520 driver data 360 are stored in database 150. Driver data 360 comprise a plurality of driver data sets, wherein each driver data set corresponds to a driver (e.g. driver 120) of a road transportation vehicle (e.g. vehicle 110). Each driver data set comprises data identifying the corresponding driver. Additionally, each driver data set may comprise a device identifier (e.g. mobile device number 370 or 380) of a mobile communication device of the corresponding driver. The device identifier may be a mobile phone number of the corresponding device or an IP address of the corresponding device. The driver data may be received by communication server 140 from a user computing device (e.g. user computing device 160, 165, 170) via communication portal 145 at a set-up time. Although FIG. 5 shows step 510 occurring before step 520, both steps can occur at essentially the same time or step 520 can occur before step 510.

In step 530, communication server 140 receives vehicle data of a particular road cargo transportation vehicle (e.g. vehicle 110) and driver data identifying a specific driver (e.g. driver 120) currently operating the particular road cargo transportation vehicle. Communication server 140 is connected to mobile communication network 135 and receives the vehicle data and the driver data via mobile communication network 135. The data are received at a point in time which is after set-up time and which is associated with the actual processing of a transport tasks, e.g. at a start time of the tour associated with the transport task, at a time when the driver assumes responsibility as the driver of a road cargo transportation vehicle for carrying out a transportation task, at a start time of a transportation task or at another time during the transportation task.

In some embodiments, communication server 140 receives the vehicle data and the driver data from a communication unit of an electronic tachograph (e.g. electronic tachograph 130). In other embodiments, communication server 140 receives the vehicle data and the driver data via mobile communication network 135 from a mobile communication device (e.g. mobile communication device 125) of the specific driver (e.g. driver 120). In some embodiments, the received vehicle data comprise the plate number of the particular road cargo transportation vehicle. Alternatively or additionally, the vehicle data may comprise the VIN number of the particular road cargo transportation vehicle. In some embodiments the vehicle data may also comprise technical data concerning the state of the vehicle (e.g. axle loads, speed or other technical data available via the electronic tachographs connection to a CAN bus system of the road cargo transportation vehicle). The received driver data identify the specific driver and may comprise a unique driver card identification number, a driving license number of the specific driver and/or a full name of the specific driver and the birthdate of the specific driver. Optionally, the received driver data may include a current steering time of the specific driver. In some embodiments, the driver data also include a device identifier (e.g. a mobile phone number or a current IP address) of a mobile communication device (e.g. mobile communication device 125) of the specific driver.

In step 540 communication server 140 queries database 150 for received vehicle data of the particular road cargo transportation vehicle and for the received driver data of the specific driver. In some embodiments, the query for the received vehicle data is based on the plate number or the VIN of the particular road transportation vehicle.
in step 550 communication server 140 determines whether the vehicle identified by the received vehicle data is represented in database 150 by a matching vehicle data set (e.g. vehicle data set 335) in vehicle data 330 and whether the driver identified by the received driver data is represented in database 150 by a matching driver data set (e.g. driver data set 365) in driver data 360. If both the driver and the vehicle are stored in database 150 (i.e. are represented in the database 150 with a respective matching data set), communication server 140 associates the device identifier of the mobile device of the specific driver with the plate number of the particular road cargo transportation vehicle. The respective plate number of the particular road cargo transportation vehicle may be retrieved from the matching vehicle data set of vehicle data 330 in database 150. In some embodiments, the mobile device identifier of the driver's mobile communication device is retrieved from the matching driver data set of driver data 360 in database 150. In other embodiments, the device identifier is specified in the driver data received in step 530 and may be retrieved from the received driver data.

Communication server 140 receives in step 560 a message destined for the specific driver (e.g. driver 120) of the particular road cargo transportation vehicle (e.g. road transportation vehicle 110). The message is addressed to the road cargo transportation vehicle by specifying the plate number of the vehicle as the target address of the message. In some embodiments, the plate number is specified as the target address of the message in the message itself (e.g. in a dedicated target address field of the message). In other embodiments, the plate number is specified as the target address of the message in a request received prior to the received message. The received request may set the plate number as the target address for a plurality of messages that are received after the request. The request may be received from the communication portal and may be the result of a user selecting a transport task (e.g. as in user interface 200) to which the particular road cargo transportation vehicle is assigned. The message may also be received via communication portal 145 from a user's computing device (e.g. one of devices 160, 165 or 170). The user may send the message via user interface 200 provided by communication portal 145.

In step 570, communication server 140 queries database 150 for the plate number specified for or in the received message to determine the respective associated device identifier. Communication server 140 may parse the received message for the specified plate number or may obtain the plate number form the received request. Communication server 140 may then issue a query to database 150 for the plate number specified in or for the message received in step 560, in order to determine a device identifier that has been associated with the plate number in step 550. In case the plate number is specified for the message in a separate request prior to receiving the message, step 570 may be performed after the request is received but before the message is received. In this case, step 570 may only be performed once for a received request and may not be repeated for each individual received message received after the request. If the plate number is specified in the message (e.g. in a dedicated target address field), step 570 may be performed for each individual message or may be performed only once for a first message specifying a plate number and may not be repeated if a subsequent message is addressed to the same plate number.

In step 580, communication server 140 forwards the message received in step 560 to the mobile communication device identified by the device identifier returned by database 150. Communication server 140 specifies the determined device identifier as the destination address of the forwarded message. In some embodiments, the received message may be forwarded as an instant message (e.g. a WhatsApp^{®} message or a Facebook^{®} message) to the mobile communication device (e.g. mobile communication device 125) identified by the determined device identifier. An instant message may be created based on the received message and the instant message then may be sent to the mobile communication device by providing the determined mobile device identifier (i.e. the mobile phone number of the mobile communication device) as the target address of the instant message. In these embodiments, communication server 140 may act as an instant messaging client by employing an API of an instant messaging service (e.g. WhatsApp^{®}, Facebook^{®} messenger, Google^{®} messenger, or Telegram^{®}). In other embodiments, the received message may be forwarded as an SMS, EMS, or MMS message to the mobile communication device (e.g. mobile communication device 120) identified by the matching device identifier (i.e. the mobile phone number of the mobile communication device). In alternative embodiments, the determined device identifier may be an IP-address (IP = Internet Protocol) of the mobile communication device and communication server 140 forwards the received message to the mobile communication device by specifying the IP-address of the mobile communication device as the target address of the forwarded message.

In some embodiments, database 150 additionally stores transport task data comprising a plurality of transport task data sets. Each transport task data set corresponds to a specific transport task. A transport task data set typically comprises a departure location, a destination location, a date and time when the transport task has to be carried out and/or details about the load that has to be carried including e.g. the weight, the volume, the type, and/or the danger class of the load. In addition, the transport task data set may specify a shipper for which the transport task is to be carried out, a forwarder who is coordinating the transport task and a carrier who will carry out the transport task. Furthermore, database 150 may store communication groups of users of the communication system, wherein a communication group may be associated with a transport task i.e. the respective transport task data set and may comprise the users, which are associated with the transport task (e.g. the associated shipper, the associated carrier and the associated forwarder), the communication group may also include the road cargo transportation vehicle which is assigned to the respective transport task. In exemplary embodiments, communication server 140 (e.g. data processing module 315) may query database 150 for a transport task and a corresponding communication group based on the vehicle data of the particular road cargo transportation vehicle received in step 530. This may include querying database 150 for a transport task to which the particular road cargo transportation vehicle (e.g. vehicle 110) is assigned to based e.g. on the plate number or the VIN of the vehicle received in step 530. In response to the query database 150 may provide a matching transport task data set to communication server 140. Communication server 140 may also query database 150 for a communication group that is associated with the transportation task represented by the transportation task data set provided by database 150. Database 150 may process the query and provide a matching communication group to communication server 140. Communication server 140 may further receive another message from the mobile communication device of the specific driver (e.g. driver 120) currently operating the particular road cargo transportation vehicle (e.g. vehicle 110). Communication server 140 may then forward this message to at least one of or to all of the users in the matching communication group.

In some embodiments, communication server 140 queries the transport task and the communication group after having received the vehicle data in step 530 but before forwarding the message in step 570. Communication server 140 may then add an identifier of the communication group to the forwarded message prior to forwarding the message. The added identifier allows identifying the communication group associated with the transport task to which the particular road cargo transportation vehicle is assigned. The other message received at the communication server from the mobile communication device of the specific driver may be a reply to the message forwarded in step 580 and may specify the communication group identifier added to the message before forwarding the message in step 580. Communication server 140 may parse the reply message for a communication group identifier and may forward the reply message to at least one of the users (or to all of the users) of the communication group identified by the communication group identifier specified in the reply message.

In some embodiments, the specific driver's mobile communication device may include a geo-location module (i.e. a GPS module) that is configured to detect the current geographical location of the mobile communication device. The other message received from the specific driver's mobile communication device may include an indication of the current geographical location detected by the geo-location module of the mobile communication device. Communication sever 140 may retrieve this geo-location data from the other message and provide the geo-location data to at least one or to all of the users in the communication group associated with the transportation task to which the particular road cargo transportation vehicle is assigned.

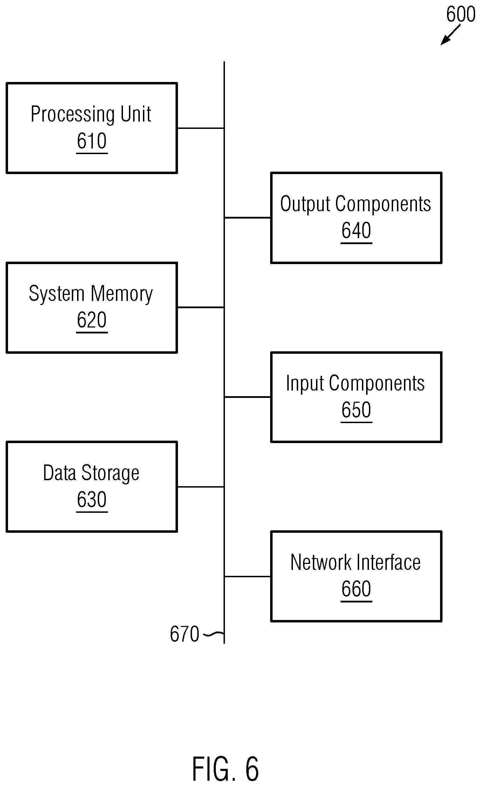

FIG. 6 is a computing device 600 suitable for certain components of the road cargo transportation system 100 in FIG 1. For example, the computing device 600 may be embodied in user computing devices 160, 165 and 170, communication server 140, mobile communication device 125 or electronic tachograph 130 of FIG 1. Computing device 600 includes one or more processing units 610 and system memory 620. A system bus 670 can be used for communicating between processing units 610 and system memory 620.

Computing device 600 can have additional functionality and additional components to provide this functionality. System bus 670 may provide communication between processing units 610, system memory 620 and the additional components of computing device 600. The additional components may comprise data storage 630, output components 640, input components 650 and network interface 660.

Data storage 630 may comprise removable storage devices and/or non-removable storage. Examples of removable storage and non-removable storage devices include magnetic disk devices such as flexible disk drives and hard-disk drives, optical disk drives such as compact disk (CD) drives or digital versatile disk (DVD) drives, solid state drives (SSD), and tape drives to name a few.

Output components 640 may include a graphics processing unit to drive internal or external displays and an audio processing unit to drive internal or external speakers. Output components 640 may also include processing units for providing connection to external devices e.g. USB devices, Firewire devices, SCSI devices, and the like.

Input components 650 may include circuitry for receiving user input. Depending on the configuration, user input may be provided by a keyboard, a mouse, a touch pad, a touch interface such as a touch screen, or the like. Input components may also include circuitry for receiving data from external or internal devices such as USB devices, Firewire devices, SCSI devices and the like.

Network interface 660 may include a network controller configured to provide communication with one or more other computing devices over a network communication link. The network controller may provide communication with other computing devices via a cellular network (e.g. GSM, USTM, LTE), satellite-based network (e.g. Iridium Global Network or Inmarsat Network), an Ethernet-based network (typically employing IPv4 or IPv6). The network controller may also allow connecting to other devices via a short range wireless communication method such as Bluetooth^{®}, near field communication (NFC) or wireless LAN (WLAN).

The embodiments presented herein are not to be understood as restricted to only the described specific combination of features performed by hardware and/or software entities. In particular, other possible embodiments may comprise any combination of features from described embodiments. Moreover, features described in the context of a certain embodiment may also be comprised in other embodiments without being explicitly presented as such. Embodiments may comprise more or less features than described. Further, software and hardware entities may perform more or less features than described in a certain embodiment. A software or hardware entity may also perform features that are described in the context of other software or hardware entities. In addition, steps described in a certain order in the context of a method may be performed in any other reasonable order. It is to be understood that the present description encompasses all embodiments that arise from these alternative combinations of features and entities.

While the invention has been described with respect to the physical embodiments constructed in accordance therewith, it will be apparent to those skilled in the art that various modifications, variations and improvements of the present invention may be made in the light of the above teachings and within the purview of the appended claims without departing from the spirit and intended scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A road cargo communication method of establishing communication with a driver of a road cargo transportation vehicle based on the vehicle's plate number, the method being performed by a communication server of a communication system, the communication server having a database storing vehicle data including plate numbers of a plurality of road cargo transportation vehicles and driver data identifying a plurality of drivers and device identifiers of mobile communication devices for each driver of said plurality of drivers, the method comprising:
receiving vehicle data of a particular road cargo transportation vehicle currently operated by a specific driver and receiving driver data identifying the specific driver;
querying the database, wherein querying the database comprises querying the database for the vehicle data of said particular road cargo transportation vehicle and querying the database for the driver data identifying the specific driver;
if the particular road cargo transportation vehicle and the specific driver are determined as being stored in the database, associating the device identifier of the specific driver's mobile communication device with the particular road cargo transportation vehicle's plate number;
receiving a message destined for the specific driver but addressed to the particular road cargo transportation vehicle by specifying the particular road cargo transportation vehicle's plate number as the target address of the message; and
forwarding the message to the specific driver's mobile communication device via a mobile communication network based on the specific driver's device identifier obtained by querying the database for the particular road cargo transportation vehicle's plate number.

2. The road cargo communication method of claim 1, wherein the communication system further comprises:
an electronic tachograph of the particular road cargo transportation vehicle, the electronic tachograph being configured to read the driver data identifying the specific driver from a driver identification card and to store the driver data and the vehicle data of the particular road cargo transportation vehicle on an internal storage of the electronic tachograph; and
a communication device connected to the electronic tachograph, the communication device being configured to read, from the internal storage of the electronic tachograph, the vehicle data and the driver data and to transmit the vehicle data and the driver data to the communication server via a mobile communication network connection,
wherein receiving the vehicle data of the particular road cargo transportation vehicle and receiving the driver data identifying the specific driver comprises receiving the vehicle data and the driver data from the electronic tachograph of the particular road cargo transportation vehicle via the communication device connected to the tachograph.

3. The road cargo communication method of claim 2, wherein the electronic tachograph is further configured to store a current steering time of the specific driver on the internal storage of the electronic tachograph, wherein the communication device is further configured to transmit the current steering time of the specific driver to the communication server and wherein the method further comprises receiving the current steering time of the specific driver from the electronic tachograph via the communication device connected to the electronic tachograph.

4. The road cargo communication method of any of claims 1 to 3, wherein the specific driver's device identifier is at least one of a mobile phone number and an IP address of the specific driver's mobile communication device.

5. The road cargo communication method of any of claims 1 to 4, wherein the vehicle data of the particular road cargo transportation vehicle comprise at least one of the plate number and the chassis number of the particular road cargo transportation vehicle.

6. The road cargo communication method of any of claims 1 to 5, wherein the database further stores a plurality of transport tasks and for each transport task a communication group comprising a plurality of users of the communication system, wherein the method further comprises:
querying, based on the vehicle data of the particular road cargo transportation vehicle, the database for a transport task assigned to the particular road cargo transportation vehicle and for the corresponding communication group;
receiving another message from the specific driver's mobile communication device; and
forwarding the other message to at least one of the plurality of users of the communication group corresponding to said transport task.

7. The road cargo communication method of claim 6, wherein the method further comprises:
prior to forwarding the message, adding a communication group identifier to the message, wherein the communication group identifier identifies the communication group corresponding to the assigned transport task,
wherein receiving the other message comprises receiving the other message as a reply to the message and wherein the other message specifies the communication group identifier and wherein forwarding the other message comprises forwarding the other message to at least one of the plurality of users of the communication group identified by the communication group identifier specified in the other message.

8. The road cargo communication method of claim 3 and claim 6, wherein the method further comprises providing the steering times of the specific driver to at least one of the plurality of users of the communication group corresponding to said transport task.

9. The road cargo communication method of claim 6, wherein the specific driver's mobile communication device comprises a geo-location module configured to detect the current geographical location of the specific driver's mobile communication device, wherein the method further comprises:
receiving, from the specific driver's mobile communication device, geo-location data indicating a current geographical location of the mobile communication device detected by the respective geo-location module; and
providing the geo-location data to at least one of the of the plurality of users of the communication group corresponding to said transport task.

10. A road cargo communication system for establishing communication with a driver of a road cargo transportation vehicle based on the vehicle's plate number, wherein the system comprises:
a database storing vehicle data including plate numbers of a plurality of road cargo transportation vehicles and driver data identifying a plurality of drivers and device identifiers of mobile communication devices for each driver of said plurality of drivers;
a communication server connected to the database and to a first and a second mobile communication network, wherein the communication server comprises:
a first receiving module configured to receive via the first mobile communication network, vehicle data of a particular road cargo transportation vehicle and driver data identifying a specific driver currently operating said vehicle;
a data processing module configured to query the database for the vehicle data of said particular road cargo transportation vehicle and querying the database for the driver data identifying the specific driver and, if the particular road cargo transportation vehicle and the specific driver are determined as being stored in the database, associate the specific driver's device identifier of the specific driver's mobile communication device with the particular road cargo transportation vehicle's plate number;
a second receiving module configured to receive a message destined for the specific driver but addressed to the particular road cargo transportation vehicle by specifying the particular road cargo transportation vehicle's plate number as the target address of the message; and
a forwarding module configured to query the database for the particular road cargo transportation vehicle's plate number to determine the device identifier of the specific driver's mobile communication device and forward the message to the specific driver's mobile communication device via the second mobile communication network based on the determined device identifier; and
a communication device for an electronic tachograph of the particular road cargo transportation vehicle, the communication device being configured to read the vehicle data and the driver data from the electronic tachograph and to transmit the vehicle data and the driver data to the first receiving module of the communication server via the first mobile communication network.

11. The road cargo communication system of claim 10, wherein the electronic tachograph is configured to store a current steering time of the specific driver on the internal storage of the electronic tachograph and wherein the communication device is further configured to read the current steering time from the electronic tachograph and transmit the current steering time of the specific driver via the first mobile communication network to the communication server.

12. The road cargo communication system of claims 10 or 11, wherein the specific driver's device identifier is at least one of a mobile phone number and an IP address of the specific driver's mobile communication device.

13. The road cargo communication system of any of claims 10 to 12, wherein the vehicle data of the particular road cargo transportation vehicle comprise at least one of the plate number and the chassis number of the particular road cargo transportation vehicle.

14. The road cargo communication system of any of claims 10 to 13, wherein the database is further configured to store a plurality of transport tasks and for each transport task a communication group comprising a plurality of users of the communication system,
wherein the data processing module is further configured to query, based on the vehicle data of the particular road cargo transportation vehicle, the database for a transport task assigned to the particular road cargo transportation vehicle and for the corresponding communication group;
receiving another message from the specific driver's mobile communication device; and
forwarding the other message to at least one of the plurality of users of the communication group corresponding to said transport task.

15. A communication device connectable to an electronic tachograph of a road cargo transportation vehicle, the communication device being configured to read, from the electronic tachograph, vehicle data of said vehicle and driver data identifying a driver currently operating said vehicle and to transmit the vehicle data and the driver data to a communication server of a road cargo communication system according to any of claims 10 to 14.
